# EUROPÄISCHE PATENTSCHRIFT

(11) **EP 2 804 784 B1**
(45) Veröffentlichungstag und Bekanntmachung des Hinweises auf die Patenterteilung: **27.02.2019**
(21) Anmeldenummer: 13701395.9
(22) Anmeldetag: 15.01.2013
(51) Int. Cl.: B60Q 1/068

(54) **VERSTELLVORRICHTUNG FÜR LICHTMODULE EINES FAHRZEUGS**
ADJUSTMENT DEVICE FOR LIGHT MODULES IN A VEHICLE
DISPOSITIF DE RÉGLAGE POUR DES MODULES D'ÉCLAIRAGE D'UN VÉHICULE

(30) Priorität: 20.01.2012 DE 102012100461
(43) Veröffentlichungstag der Anmeldung: 26.11.2014
(73) Patentinhaber: HELLA GmbH & Co. KGaA, 59552 Lippstadt (DE); Willeke, Franz-Georg, 59609 Anröchte (DE)
(72) Erfinder: WILLEKE, Franz-Georg, 59609 Anröchte (DE)
(86) Internationale Anmeldenummer: PCT/EP2013/050605
(87) Internationale Veröffentlichungsnummer: WO 2013/107716

(56) Entgegenhaltungen:
- EP-A1- 1 405 762
- EP-A2- 1 516 781
- WO-A1-2009/076438
- US-A- 4 884 174

## Beschreibung

Die Erfindung betrifft eine Verstellvorrichtung für Lichtmodule eines Fahrzeugs nach dem Oberbegriff des Patentanspruchs 1.

Aus der DE 195 14 994 C1 ist eine Verstellvorrichtung für Lichtmodule eines Fahrzeugs bekannt, mittels derer das Lichtmodul um eine horizontale oder vertikale Achse bezüglich eines feststehenden Gehäuses verschwenkbar ist. Die Verstellvorrichtung weist ein linearverschiebliches Stellorgan auf, das über ein Gelenk mit einem Tragrahmen des Lichtmoduls verbunden ist. Als Gelenk ist zum einen ein kugelförmiges Gelenkteil vorgesehen, das fest mit dem Stellorgan verbunden ist. Zum anderen weist das Gelenk ein Gleitelement mit einem schalenförmigen Gelenkteil auf, in dem das kugelförmige Gelenkteil des Stellorgans rastend gehalten ist. Das Gleitelement ist an einem Anlenkungsort des Tragrahmens in alle Richtungen quer zur durch das Stellorgan vorgegebene Verstellrichtung verschieblich gelagert, so dass Lageabweichungen zwischen dem kugelförmigen Gelenkteil des Stellorgans einerseits und dem schalenförmigen Gelenkteil andererseits ausgeglichen werden können. Das Gleitelement ist schubladenartig quer zur Verstellrichtung in Führungsaufnahmen des Tragrahmens eingesetzt. Nachteilig an der bekannten Verstellvorrichtung ist, dass das kugelförmige Gelenkteil nur über eine Linienauflage in dem schalenförmigen Gelenkteil angeordnet ist, so dass es nur geringe Kräfte übertragen kann.

Aus der EP 1 405 762 A1 ist eine Verstellvorrichtung für Lichtmodule eines Fahrzeugs mit einem Gelenk bekannt, bei der ein kugelförmiges Gelenkteil in einem schalenförmigen Gelenkteil gelagert ist. Das schalenförmige Gelenkteil ist über Stützelemente an quaderförmigen Gehäuseteil abgestützt. Ferner ist das schalenförmige Gelenkteil fest mit dem Lichtmodul verbunden.

Aus der EP 1 516 781 A2 ist eine Verstellvorrichtung für Lichtmodule eines Fahrzeugs mit einem Gelenk bestehend aus einem kugelförmigen Gelenkteil und einem schalenförmigen Gelenkteil bekannt. Das schalenförmige Gelenkteil weist Rastelemente auf, mittels derer das schalenförmige Gelenkteil klemmend in einer Montageöffnung einer Wandung gehalten ist.

Aus der US 4 884 174 A ist eine Verstellvorrichtung für Lichtmodule eines Fahrzeugs bekannt, wobei ein in Verstellrichtung beweglich angeordnetes Stellorgan über ein Gelenk mit einem ein Lichtmodul tragenden Tragrahmen verbunden ist. Das Gelenk umfasst ein kugelförmiges Gelenkteil, das in einem schalenförmigen Gelenkteil gelagert ist. Das schalenförmige Gelenkteil ist verschiebbar quer zur Verstellrichtung gelagert.

Aufgabe der vorliegenden Erfindung ist es, eine Verstellvorrichtung für Lichtmodule eines Fahrzeugs derart weiterzubilden, dass auf einfache Weise ein effektiver Toleranzausgleich an einem Gelenk der Verstellvorrichtung gewährleistet ist.

Zur Lösung dieser Aufgabe weist die Erfindung die Merkmale des Patentanspruchs 1 auf.

Der besondere Vorteil der Erfindung besteht darin, dass durch eine flächige Anlage eines schalenförmigen Gelenkteils an einem Tragrahmen eine hohe Kraftübertragung und ein direkter Kraftfluss von einem kugelförmigen Gelenkteil in den Tragrahmen gewährleistet ist. Erfindungsgemäß wird der erforderliche Toleranzausgleich im Wesentlichen in einem Bereich zwischen dem schalenförmigen Gelenkteil und dem Tragrahmen verwirklicht.

Nach der Erfindung weist das schalenförmige Gelenkteil zwei gegenüberliegende flügelförmige Rastelemente auf, die einen Anschlag eines das schalenförmige Gelenkteil aufnehmenden Halteteils des Tragrahmens hintergreifen. Der Anschlag ist vorzugsweise geradlinig und quer zur Verstellrichtung angeordnet und gibt mit seiner Erstreckungsrichtung die Toleranzausgleichsrichtung vor. Wenn der Anschlag des Halteteils in eine Rastposition zwischen einem Ende des flügelförmigen Rastelementes einerseits und einem Ende des Schenkels des schalenförmigen Gelenkteils andererseits angeordnet ist, ist das schalenförmige Gelenkteil in Verstellrichtung fest und entlang der Erstreckungsrichtung des Anschlags linearbeweglich angeordnet.

Nach einer bevorzugten Ausführungsform der Erfindung ist der flächige Auflageabschnitt des schalenförmigen Gelenkteils in einer quer zur Verstellrichtung verlaufenden Ebene angeordnet, so dass eine ausreichend große Anlagefläche zur Kraftübertragung gewährleistet ist.

Nach der Erfindung verläuft der flächige Auflageabschnitt eben, wobei ein erster Auflageabschnitt an einem ersten Schenkel des schalenförmigen Gelenkteils und ein zweiter Auflageabschnitt an einem zu dem ersten Schenkel gegenüberliegenden zweiten Schenkel des schalenförmigen Gelenkteils angeordnet ist. Vorteilhaft können hierdurch auf einfache Weise flächige Übergabenflächen geschaffen werden, die durch einfache Werkzeugtechnik herstellbar sind.

Nach einer Weiterbildung der Erfindung sind die den Auflageabschnitt tragenden ersten Schenkel und zweiten Schenkel des schalenförmigen Gelenkteils in der gemeinsamen Erstreckungsebene nachgiebig ausgebildet, so dass ein kugelförmiges Gelenkteil in das schalenförmige Gelenkteil einrasten kann. In der Einrastposition liegt das kugelförmige Gelenkteil flächig an einer kugelförmigen Innenfläche des schalenförmigen Gelenkteils an.

Nach einer Weiterbildung der Erfindung ist das schalenförmige Gelenkteil in einem umfangsseitig geschlossenen Halteteil, vorzugsweise in einem rechteckförmigen Halteteil, in Verstellrichtung fest und in einer vorgegebenen Querrichtung zum Toleranzausgleich verschiebbar angeordnet. Der Toleranzausgleich für die Verstellvorrichtung weist somit einen relativ einfachen Aufbau auf.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

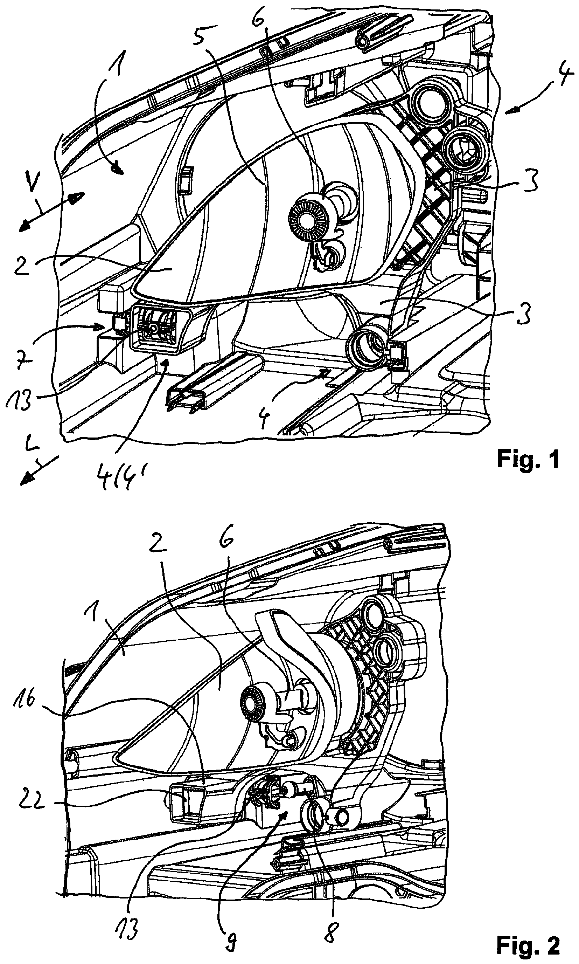

- Fig. 1: eine perspektivische Vorderansicht eines Lichtmoduls mit einer untenseitig angeordneten Verstellvorrichtung,
- Fig. 2: eine perspektivische Seitenansicht des Lichtmoduls mit der in Explosionsdarstellung dargestellten Verstellvorrichtung,
- Fig. 3: eine Vorderansicht der Verstellvorrichtung in montierter Position,
- Fig. 4: einen Vertikalschnitt durch die Verstellvorrichtung in Figur 3 entlang der Linie IV-IV,
- Fig. 5: einen Vertikalschnitt durch die Verstellvorrichtung in Figur 3 entlang der Linie V-V und
- Fig. 6: eine Vorderansicht eines schalenförmigen Gelenkteils.

Ein Scheinwerfer für Fahrzeuge weist ein topfförmiges Scheinwerfergehäuse 1 auf, in dem ein Lichtmodul 2 zur Erzeugung einer Abblendlicht- oder Fernlichtverteilung angeordnet ist. Das Lichtmodul 2 ist an einem dasselbe umgebenden Tragrahmen 3 befestigt, der über drei verteilt angeordnete Lagerpunkte 4 gelenkig mit dem Scheinwerfergehäuse 1 verbunden ist, so dass das Lichtmodul 2 um eine horizontale und/oder vertikale Achse verschwenkbar ist, beispielsweise für eine Leuchtweitenregelung oder für eine Kurvenlichtfunktion. Das Lichtmodul 2 besteht vorzugsweise aus einem Reflektor 5 und einer Lichtquelle 6.

An einem unteren Lagerpunkt 4' ist das Lichtmodul 2 bzw. der Tragrahmen 3 über ein Gelenk 7 mit einem linear in Verstellrichtung V beweglich angeordneten Stellorgan 8 einer Verstellvorrichtung 9 gekoppelt. Die Verstellvorrichtung 9 verläuft parallel zu einer Lichtabstrahlrichtung L des Lichtmoduls 2 und weist im Wesentlichen das Stellorgan 8, das Gelenk 7 und ein Halteteil 16 des Tragrahmens 3 auf.

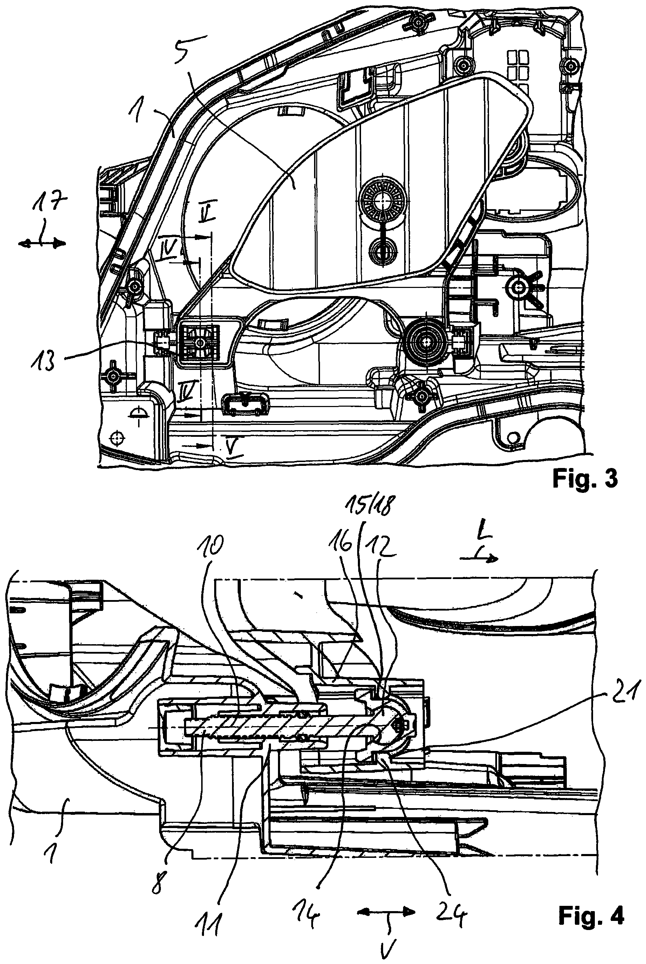

Wie aus Figur 4 ersichtlich ist, ist das Stellorgan 8 über einen Gewindeschaft 10 desselben drehbar mit einer Gewindehülse 11 des Scheinwerfergehäuses 1 in Eingriff, so dass mittels eines nicht dargestellten Betätigungselementes (Werkzeug oder Stellmotor) eine lineare Bewegung des Stellorgans 8 in Verstellrichtung V relativ zu der ortsfesten Gewindehülse 11 verwirklicht wird. Hierdurch kann beispielsweise eine Grundeinstellung des Lichtmoduls 2 bewirkt werden.

Das Stellorgan 8 weist an einem freien Ende ein kugelförmiges Gelenkteil 12 auf, das in der Arbeitsposition in einem schalenförmigen Gelenkteil 13 des so gebildeten Gelenkes 7 gelagert ist. Das schalenförmige Gelenkteil 13 weist eine kugelförmige Innenfläche 14 auf, an der die Oberfläche des kugelförmigen Gelenkteils 12 flächig anliegt. Das schalenförmige Gelenkteil 13 umgreift somit fast vollständig das kugelförmige Gelenkteil 12 unter flächiger Anlage.

Das schalenförmige Gelenkteil 13 ist über einen flächigen Auflageabschnitt 15 in dem im Querschnitt rechteckförmigen Halteteil 16 des Tragrahmens 3 in Verstellrichtung V fest, aber in einer quer zur Verstellrichtung V verlaufenden Querrichtung 17 bewegbar angeordnet. Hierdurch können Toleranzausgleiche in horizontaler Richtung ausgeglichen werden. Der Auflageabschnitt 15 verläuft eben, wobei ein erster Auflageabschnitt 18 im Bereich eines freien Endes eines ersten Schenkels 19 des schalenförmigen Gelenkteils 13 und ein zweiter Auflageabschnitt 18' im Bereich eines freien Endes eines zu dem ersten Schenkel 19 gegenüberliegenden zweiten Schenkel 19' des schalenförmigen Gelenkteils 13 angeordnet ist. Der erste Auflageabschnitt 18 und der zweite Auflageabschnitt 18' des schalenförmigen Gelenkteils 13 verlaufen jeweils als eine zu einer ersten Mittelebene M1 abgewandten Außenfläche der Schenkel 19, 19', die sich quer zur Verstellrichtung V (in horizontaler Richtung) stegförmig erstreckt. Der erste Schenkel 19 und der zweite Schenkel 19' verlaufen klammerförmig in einer senkrecht zur ersten Mittelebene M1 verlaufenden zweiten Mittelebene M2, die senkrecht zur Querrichtung 17 verläuft. Der erste Schenkel 19 und der zweite Schenkel 19' des schalenförmigen Gelenkteils 13 sind nachgiebig ausgebildet, so dass das kugelförmige Gelenkteil 12 durch Einrasten mit dem schalenförmigen Gelenkteil 13 verbindbar ist.

Damit das schalenförmige Gelenkteil 13 entgegen der Lichtabstrahlrichtung L in dem Halteteil 16 fest gelagert ist, weist das schalenförmige Gelenkteil 13 zusätzlich als Rastelement ein erstes flügelförmiges Rastelement 20 und ein gegenüberliegendes zweites Rastelement 20' auf. Diese Rastelemente 20, 20' hintergreifen einen Anschlag 21 des Halteteils 16. Der Anschlag 21 ist Teil eines inneren Vorsprungs 22 des Halteteils 16, der in der Montageposition zwischen den Enden des ersten und zweiten Schenkels 19, 19' einerseits und den Enden des ersten und zweiten Rastelements 20, 20' andererseits verläuft. Hierdurch ist gewährleistet, dass das schalenförmige Gelenkteil 13 in Axialrichtung (Verstellrichtung V) fest angeordnet ist.

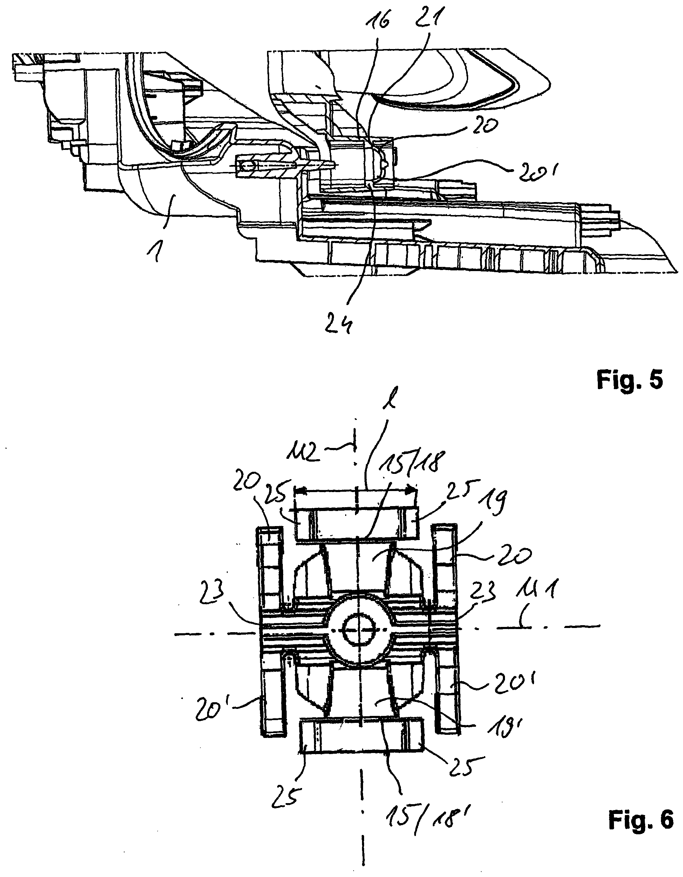

Der erste Schenkel 19 und der zweite Schenkel 19' verlaufen jeweils in einem mittleren Bereich des schalenförmigen Gelenkteils 13, durch den die zweite Mittelebene M2 verläuft. Das erste Rastelement 20 und das zweite Rastelement 20' verlaufen außermittig jeweils zu beiden Seiten des ersten Schenkels 19 bzw. des zweiten Schenkels 19', wie besser aus Figur 6 ersichtlich ist. Der erste Schenkel 19 und der zweite Schenkel 19' sowie das erste Rastelement 20 und das zweite Rastelement 20' verlaufen jeweils bogenförmig von einem gemeinsamen Scheitelbereich 23, der sich in der ersten Mittelebene M1 des schalenförmigen Gelenkteils 13 erstreckt.

In einem scheitelnahen Bereich des schalenförmigen Gelenkteils 13 verlaufen das erste Rastelement 20 und das zweite Rastelement 20' in einem größeren Abstand zu der ersten Mittelebene M1 als der erste Schenkel 19 und der zweite Schenkel 19'. Hierdurch wird ein Hintergreifen des Anschlags 21 bewirkt, so dass in der Montagestellung eine Stirnfläche 24 des Vorsprungs 22 an dem Auflageabschnitt 18, 18' des ersten Schenkels 19 bzw. des zweiten Schenkels 19' anliegt. Das erste Rastelement 20 und das zweite Rastelement 20' weisen eine kürzere Länge auf als der erste Schenkel 19 bzw. der zweite Schenkel 19'. Der Vorsprung 22 ist zwischen den Enden der Rastelemente 20, 20' und den Enden der Schenkel 19, 19' klemmend gehalten. Hierzu weisen die Enden der Schenkel 19, 19' seitlich vorstehende Lappen 25 auf, mittels derer ein fester Sitz der Enden der Schenkel 19, 19' an dem Vorsprung 22 gewährleistet ist.

Damit das schalenförmige Gelenkteil 13 in Querrichtung 17 verschiebbar angeordnet ist, weist die Öffnung des Halteteils 16 in Querrichtung 17 eine größere Länge auf als eine Länge I des flächigen Auflageabschnitts 15 des schalenförmigen Gelenkteils 13.

Zur Montage wird das schalenförmige Gelenkteil 13 rastend mit dem kugelförmigen Gelenkteil 12 des Stellorgans 8 verbunden. Dann wird das Stellorgan 8 in Verstellrichtung V relativ zu dem Tragrahmen 3 verschoben, so dass das Stellorgan 8 von hinten in die Öffnung des Halteteils 16 so weit eingreift, bis die Rastelemente 20, 20' den Anschlag 21 des Halteteils 16 hintergreifen. Die Montageposition ist nunmehr erreicht.

**Bezugszeichenliste**

| | | | |
|---|---|---|---|
| 1 | Scheinwerfergehäuse | V | Verstellrichtung |
| 2 | Lichtmodul | I | Länge |
| 3 | Tragrahmen | L | Hauptabstrahlrichtung |
| 4 | Lagerpunkt | M1, M2 | Mittelebene |
| 5 | Reflektor | | |
| 6 | Lichtquelle | | |
| 7 | Gelenk | | |
| 8 | Stellorgan | | |
| 9 | Verstellvorrichtung | | |
| 10 | Gewindeschaft | | |
| 11 | Gewindehülse | | |
| 12 | kugelförmiges Gelenkteil | | |
| 13 | schalenförmiges Gelenkteil | | |
| 14 | Innenfläche | | |
| 15 | flächiger Auflageabschnitt | | |
| 16 | Halteteil | | |
| 17 | Querrichtung | | |
| 18, 18' | erster Auflageabschnitt, zweiter Auflageabschnitt | | |
| 19, 19' | erster Schenkel, zweiter Schenkel | | |
| 20, 20' | Rastelement | | |
| 21 | Anschlag | | |
| 22 | Vorsprung | | |
| 23 | Scheitelbereich | | |
| 24 | Stirnfläche | | |
| 25 | Lappen | | |

## Patentansprüche

1. Verstellvorrichtung für Lichtmodule (2) eines Fahrzeugs, durch welche das Lichtmodul (2) um eine horizontale oder vertikale Achse verschwenkbar gegenüber einem Gehäuse (1) angeordnet ist, mit einem entlang einer Verstellrichtung (V) beweglich angeordneten Stellorgan (8), das über ein Gelenk (7) mit einem das Lichtmodul (2) tragenden Tragrahmen (3) verbunden ist, wobei das Gelenk (7) zum einen ein kugelförmiges Gelenkteil (12) und zum anderen ein dasselbe aufnehmendes schalenförmiges Gelenkteil (13) aufweist, dass das schalenförmige Gelenkteil (13) einen flächigen Auflageabschnitt (15) aufweist zur flächigen Anlage an einem Halteteil (16) des Tragrahmens (3), wobei der flächige Auflageabschnitt (15) an dem Halteteil (16) quer zu der Verstellrichtung (V) verschiebbar gelagert ist, **dadurch gekennzeichnet, dass** der flächige Auflageabschnitt (15) eben verläuft, wobei ein erster Auflageabschnitt (18) im Bereich eines freien Endes eines ersten Schenkels (19) des schalenförmigen Gelenkteils (13) und ein zweiter Auflageabschnitt (18') im Bereich eines freien Endes eines zu dem ersten Schenkel (19) gegenüberliegenden zweiten Schenkels (19') des schalenförmigen Gelenkteils (13) angeordnet ist, und
dass das schalenförmige Gelenkteil (13) ein flügelförmiges Rastelement (20, 20') aufweist zum Hintergreifen eines Anschlags (21) des Halteteils (16), so dass das schalenförmige Gelenkteil (13) in Verstellrichtung (V) fest an dem Halteteil (16) gelagert ist, dass sich der erste Schenkel (19) und der zweite Schenkel (19') des schalenförmigen Gelenkteils (13) mittig und dass sich das erste Rastelement (20) und das zweite Rastelement (20') des schalenförmigen Gelenkteils (13) außenseitig von einem gemeinsamen Scheitelbereich (23) bogenförmig erstrecken.

2. Verstellvorrichtung nach Anspruch 1, **dadurch gekennzeichnet, dass** der flächige Auflageabschnitt (15) des schalenförmigen Gelenkteils (13) desselben in einer quer zur Verstellrichtung (V) verlaufenden Ebene angeordnet ist.

3. Verstellvorrichtung nach Anspruch 1 oder 2, **dadurch gekennzeichnet, dass** der erste Auflageabschnitt (18) und der zweite Auflageabschnitt (18') des schalenförmigen Gelenkteils (13) sich jeweils als eine zu einer ersten Mittelebene (M1) des schalenförmigen Gelenkteils (13) abgewandten Außenfläche des ersten Schenkels (19) und des zweiten Schenkels (19') erstrecken.

4. Versteilvorrichtung nach einem der Ansprüche 1 bis 3, **dadurch gekennzeichnet, dass** sich der erste Schenkel (19) und der zweite Schenkel (19') des schalenförmigen Gelenkteils (13) in einer senkrecht zu der ersten Mittelebene (M1) verlaufenden zweiten Mittelebene (M2) erstrecken und dass der erste Schenkel (19) und der zweite Schenkel (19') in Richtung der zweiten Mittelebene (M2) nachgiebig ausgebildet sind zum Einrasten des kugelförmigen Gelenkteils (12) in das schalenförmige Gelenkteil (13).

5. Verstellvorrichtung nach einem der Ansprüche 1 bis 4, **dadurch gekennzeichnet, dass** in der Montagestellung ein nach innen weisender Vorsprung (22) des Halteteils (16) in einem Bereich zwischen einem Ende des ersten Schenkels (19) und des zweiten Schenkels (19') einerseits und einem Ende des ersten Rastelements (20) und des zweiten Rastelements (20') andererseits unter Anlage an einer Außenseite des ersten Schenkels (19) und des zweiten Schenkels (19') angeordnet ist.

6. Verstellvorrichtung nach einem der Ansprüche 1 bis 5, **dadurch gekennzeichnet, dass** der flächige Auflageabschnitt (15) des schalenförmigen Gelenkteils (13) eine kleinere Länge (I) quer zur Verstellrichtung (V) aufweist als ein in der gleichen Richtung weisender Öffnungsrand des Halteteils (16).

7. Verstellvorrichtung nach einem der Ansprüche 1 bis 6, **dadurch gekennzeichnet, dass** das schalenförmige Gelenkteil (13) eine kugelförmige Innenfläche (14) aufweist zur flächigen Umfassung des kugelförmigen Gelenkteils (12).

## Claims

1. Adjustment device for light modules (2) of a vehicle, by means of which the light module (2) is arranged rotatably around a horizontal or vertical axis relative to a housing (1), comprising an actuator (8) arranged movably along an adjustment direction (V) and being connected via an articulation (7) to a carrier frame (3) carrying the light module (2), the articulation (7) having on the one hand a ball-shaped joint part (12) and on the other hand a cup-shaped joint part (13) receiving the same, the cup-shaped joint part (13) having a plane contact section (15) for a plane contact with a holder part (16) of the carrier frame (3), wherein the plane contact section (15) is supported on the holder part (16) slidably at right angles relative to the adjustment direction (V),
**characterized in that**
the plane contact section (15) is level, wherein a first contact section (18) is arranged in the region of a free end of a first leg (19) of the cup-shaped joint part (13) and a second contact section (18') is arranged in the region of a free end of a second leg (19') of the cup-shaped joint part (13) and opposite the first leg (19), and that the cup-shaped joint part (13) has a wing-shaped snap-fastening element (20, 20') designed to grip behind a limit stop (21) of the holder part (16), so that in the adjustment direction (V), the cup-shaped joint part (13) is supported tightly on the holder part (16), that the first leg (19) and the second leg (19') of the cup-shaped joint part (13) extend centrally and the first snap-fastening element (20) and the second snap-fastening element (20') of the cup-shaped joint part (13) extend on the outside of a common apex (23) in a bow-shaped manner.

2. Adjustment device according to Claim 1, **characterized in that** the plane contact section (15) of the cup-shaped joint part (13) arranged on a plane running at right angles relative to the adjustment direction (V).

3. Adjustment device according to Claim 1 or 2, **characterized in that** the first contact section (18) and the second contact section (18') of the cup-shaped joint part (13) each extend as an outer surface of the first leg (19) and the second leg (19') facing away from a first central plane (M1) of the cup-shaped joint part (13).

4. Adjustment device according to one of the Claims 1 to 3, **characterized in that** the first leg (19) and the second leg (19') extend in a second central plane (M2) running at right angles to the first central plane (M1), and that the first leg (19) and the second leg (19') are embodied in a yielding manner in the direction of the second central plane (M2) to lock the ball-shaped joint part (12) into the cup-shaped joint part (13).

5. Adjustment device according to one of the Claims 1 to 4, **characterized in that** in the assembly position, an inward pointing protrusion (22) of the holder part (16) is arranged in an area between an end of the first leg (19) and the second leg (19') on the one hand and one end of the first snap-fastening element (20) and the second snap-fastening element (20') on the other hand while having contact with an outside of the first leg (19) and the second leg (19').

6. Adjustment device according to one of the Claims 1 to 5, **characterized in that** the plane contact section (15) of the cup-shaped joint part (13) has a shorter length (I) at right angles to the adjustment direction (V) than an opening edge of the holder part (16) pointing in the same direction.

7. Adjustment device according to one of the Claims 1 to 6, **characterized in that** the cup-shaped joint part (13) has a ball-shaped inner surface (14) to encompass the surface of the ball-shaped joint part (12).

## Revendications

1. Dispositif de réglage pour des modules d'éclairage (2) d'un véhicule par lequel le module d'éclairage (2) est disposé à pivotement autour d'un axe horizontal ou vertical par rapport à un boîtier (1), avec un organe de réglage (8) disposé de manière mobile le long d'une direction de réglage (V) qui est relié à un cadre porteur (3) supportant le module d'éclairage (2) par l'intermédiaire d'une articulation (7), l'articulation (7) présentant d'une part une pièce d'articulation sphérique (12) et d'autre part une pièce d'articulation en forme de coque (13) recevant celle-ci, que la pièce d'articulation en forme de coque (13) présente une partie d'appui plane (15) pour l'appui en surface sur une pièce de maintien (16) du cadre porteur (3), la partie d'appui plane (15) sur la pièce de maintien (16) étant montée de façon transversalement déplaçable par rapport à la direction de réglage (V),
**caractérisé en ce que**
la partie d'appui plane (15) s'étend de manière plane, une première partie d'appui (18) étant disposée dans la zone d'une extrémité libre d'une première branche (19) de la pièce d'articulation en forme de coque (13) et une deuxième partie d'appui (18') étant disposée dans la zone d'une extrémité libre d'une deuxième branche (19') opposée à la première branche (19) de la pièce d'articulation en forme de coque (13), et que
la pièce d'articulation en forme de coque (13) présente un élément d'encliquetage en forme d'aile (20, 20') pour s'accrocher derrière une butée (21) de la pièce de maintien (16) de manière à ce que la pièce d'articulation en forme de coque (13) soit fermement montée sur la pièce de maintien (16) dans la direction de réglage (V), que la première branche (19) et la deuxième branche (19') de la pièce d'articulation en forme de coque (13) s'étendent au milieu et que le premier élément d'encliquetage (20) et le deuxième élément d'encliquetage (20') de la pièce d'articulation en forme de coque (13) s'étendent sur le côté extérieur en forme d'arc à partir d'une zone de sommet (23) commune.

2. Dispositif de réglage selon la revendication 1, **caractérisé en ce que** la partie d'appui plane (15) de la pièce d'articulation en forme de coque (13) de la même¹ est disposée dans un plan s'étendant transversalement par rapport à la direction de réglage (V).
¹Im Deutschen ist an dieser Stelle "desselben" eingefügt. Dies ist für den Text nicht relevant und könnte entfallen. Falls so gewünscht, bitte einfach die Wörter in rot streichen. (Anm. der Übers.)

3. Dispositif de réglage selon la revendication 1 ou 2, **caractérisé en ce que** la première partie d'appui (18) et la deuxième partie d'appui (18') de la pièce d'articulation en forme de coque (13) s'étendent respectivement en tant qu'une surface extérieure de la première branche (19) et de la deuxième branche (19') opposée à un premier plan médian (M1) de la pièce d'articulation en forme de coque (13).

4. Dispositif de réglage selon l'une des revendications 1 à 3, **caractérisé en ce que** la première branche (19) et la deuxième branche (19') de la pièce d'articulation en forme de coque (13) s'étendent dans un deuxième plan médian (M2) perpendiculairement au premier plan médian (M1) et que la première branche (19) et la deuxième branche (19') sont réalisées de manière souple dans la direction du deuxième plan médian (M2) pour l'accrochage de la pièce d'articulation sphérique (12) sur la pièce d'articulation en forme de coque (13).

5. Dispositif de réglage selon l'une des revendications 1 à 4, **caractérisé en ce qu'**en position de montage une saillie orientée vers l'intérieur (22) de la pièce de maintien (16) est disposée d'un côté dans une zone entre une extrémité de la première branche (19) et de la deuxième branche (19') et de l'autre côté une extrémité du premier élément d'encliquetage (20) et du deuxième élément d'encliquetage (20'), en appui sur un côté extérieur de la première branche (19) et de la deuxième branche (19').

6. Dispositif selon l'une des revendications 1 à 5, **caractérisé en ce que** la partie d'appui plane (15) de la pièce d'articulation en forme de coque (13) présente une longueur inférieure (I) transversalement par rapport à la direction de réglage (V) qu'un bord d'ouverture de la pièce de maintien (16) dirigé dans la même direction.

7. Dispositif de réglage selon l'une des revendications 1 à 6, **caractérisé en ce que** la pièce d'articulation en forme de coque (13) présente une surface intérieure sphérique (14) pour entourer la surface de la pièce d'articulation sphérique (12).
